Europäisches Patentamt

**European Patent Office**

**Office européen des brevets**

(19)

(11) Publication number : **0 347 955 B1**

(12) ## EUROPEAN PATENT SPECIFICATION

(45) Date of publication of patent specification :
**09.09.92 Bulletin 92/37**

(51) Int. Cl.⁵ : **A01J 5/04, A01J 5/06, A01J 7/00, A01K 1/12**

(21) Application number : **89116116.8**

(22) Date of filing : **17.07.86**

(54) **An implement for milking animals, such as cows.**

(30) Priority : **19.07.85 NL 8502082**
**19.07.85 NL 8502083**

(43) Date of publication of application :
**27.12.89 Bulletin 89/52**

(45) Publication of the grant of the patent :
**09.09.92 Bulletin 92/37**

(84) Designated Contracting States :
**DE FR GB NL SE**

(56) References cited :
**WO-A-85/02973**
**DD-A- 82 592**
**DE-A- 2 622 794**
**DE-A- 2 812 027**
**GB-A- 918 766**
**US-A- 4 010 714**

(56) References cited :
**SOVIET INVENTIONS ILLUSTRATED, week C08, published 02-04-1980, Derwent Publications Ltd.; & SU-A-667189 (FOMIN LU)20-06-1979**

(60) Publication number of the earlier application in accordance with Art. 76 EPC : **0 209 205**

(73) Proprietor : **C. van der Lely N.V.**
**Weverskade 10 P.O. Box 26**
**NL-3155 ZG Maasland (NL)**

(72) Inventor : **van der Lely, Cornelis**
**7 Brüschenrain**
**Zug (CH)**

(74) Representative : **Mulder, Herman et al**
**Octrooibureau Van der Lely N.V. Weverskade 10 P.O. Box 26**
**NL-3155 ZG Maasland (NL)**

EP 0 347 955 B1

## Description

The invention relates to a milking implement for animals, such as cows, comprising one or more teat cups, each of which being provided with at teat holder and a hose, whereby milk is discharged during milking via the hose by means of a partial vacuum and comprising control means by means of which during intervals between milking a liquid or air is supplied between a teat of the animal and the teat holder of the teat cup connected to said teat.

In milking implements it is of utmost importance that a proper hygiene is observed and that the risk of contamination to the parts of the milking implement that can be attached to the teats of the animal is reduced to a minimum. For this purpose it is generally known to apply during intervals between milking specific cleaning means to the udder of the animal, while specific jetters can be used to clean the parts of the milking implement that can be attached to the teats.

A milking implement as described in the opening paragraph and in accordance with the prior art portion of claim 1 is known from GB-A-918 766; in that implement milk is discharged via a first hose, while furthermore a second hose is provided via which in the intervals between milking a cleaning liquid can be supplied between a teat of the animal and the teat holder of the teat cup connected to said teat, which cleaning liquid can be discharged via the first hose. The invention envisages a milking implement which, in this respect, implies a more simplified construction.

For this purpose, the milking implement according to the invention is characterized in that a connection box is provided for selectively connecting one conduit of a set of conduits to the hose so that the liquid or air is supplied by the same hose which discharges during milking. In an advantageous embodiment the liquid or air, too, is discharged via the same hose. The connection between a teat cup and the connection box may comprise a hose through which a partial vacuum, a cleaning liquid or air can be supplied to the teat cup and milk or a cleaning liquid can be discharged therefrom. Except a possible hose for connection to a pulsator, the application of only one hose for each teat cup from a fixed mounted connection box to the teat cup cluster, implies a more simplified construction of the teat cup cluster and therefore of the milking implement as a whole.

In a specific embodiment, according to the invention, a teat cup is provided with means to allow cleaning liquid or air to escape along the teat if a sufficient excess pressure is brought about in the hose. This means may be constituted by substantially, upwardly directed lamellae on the interior side of the teat cup, which lamellae may lean against the teat and prevent air form being sucked along the teats when a partial vacuum prevails in the hose. Furthermore these lamellae contribute towards a proper lock of the teat holder around the animal's teat.

For a better understanding of the invention and to show how an installation for milking animals may be carried into effect, reference will now be made, by way of example, to the accompanying drawings, in which:

Figure 1 is a schematic plan view of a parlour;

Figure 2 is lateral view of a milking site with a cow occupying said place, according to the arrows II in Figure 1;

Figure 3 is a partly rear view of a cow in a milking site according to the arrow III in Figure 2;

Figure 4 is a further detailed lateral view according to a part of Figure 2;

Figure 5 is a schematic cross-section of a milking cluster connected to an udder;

Figure 6 is a bottom view of the milking cluster according to Figure 5;

Figure 7 shows a second embodiment of a milking cluster;

Figure 8 is a bottom view of the milking cluster according to Figure 7 and

Figure 9 is a cross-section of a teat cup.

In the various figures, which are only schematic renderings, corresponding components carry similar reference numerals.

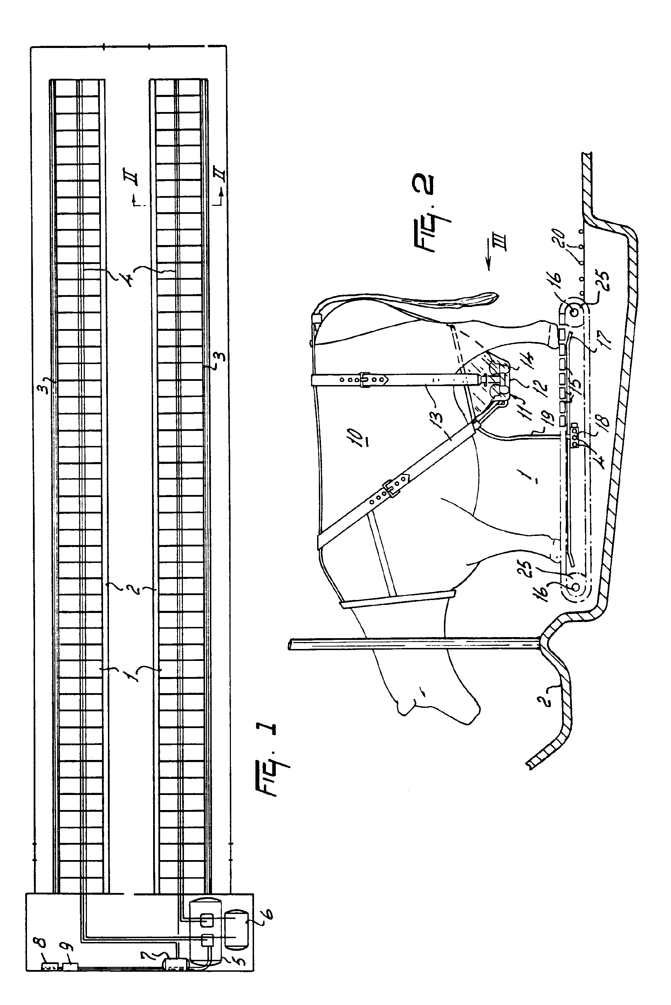

Figure 1 shows a plan view of a parlour which comprises two rows of milking sites 1. The milking sites are provided with a feeding gutter 2 at the front and with a conveyor 3 for discharging manure at the back. In the longitudinal direction of each row of milking sites 1, a set of conduits 4 is arranged underneath the above-mentioned milking sites, said conduits being designed in such a way that an attachment to conduits 4 can be brought about in each milking site. The conduits 4 comprise one or more liquid and/or air pipes. Furthermore, a schematic rendering of a milk tank 5 is given, which also goes for a tank 6 for water, rinsing liquid or cleansing liquid. A tank 7 for compressed air is also rendered. A pump, if at all provided, for bringing about a partial vacuum is not further detailed. The installation may further comprise a computer 8 and control means 9 for an automatic control, check and/or protection of the installation.

Figure 2 shows a cow 10, occupying a milking site. Said cow 10 is provided with a milking cluster 11, which may be permanently connected to the udder of the cow. The milking cluster 11 comprises an envelope 12, made of a transparent synthetic material and attached to the cow by means of straps 13. Contained within the envelope 12 are the teat cups 14, which will be further explained.

The floor of the milking parlour consists of a conveyor with mutually coupled, movable elements 15, linked to one another in the shape of an endless conveyor. The conveyor is provided with two final guiding members 16, about which the elements 15 can move, and with a support 17 to stay the elements 15, constituting the floor of the milking site 1.

The conveyor as described before having been actuated, the elements 15 which constitute the floor of the milking site can move in a rearward direction with regard to the cow, so that the cow is compelled to start walking and defilements, possibly present on the floor, can be discharged in a rearward direction. Near the floor of the milking site a connection box 18 is provided, through which connection box a partial vacuum cleansing or rinsing liquid and/or preheated air can be supplied and milk, and possibly other liquids, discharged. For that purpose the necessary conduits 19 are led from the milking cluster 11 to the connection box 18.

Behind the milking site 1 a grating 20 is rendered, allowing the manure and other defilements, if any, to fall through, then to be transported by discharge means, which are not rendered in Figure 2.

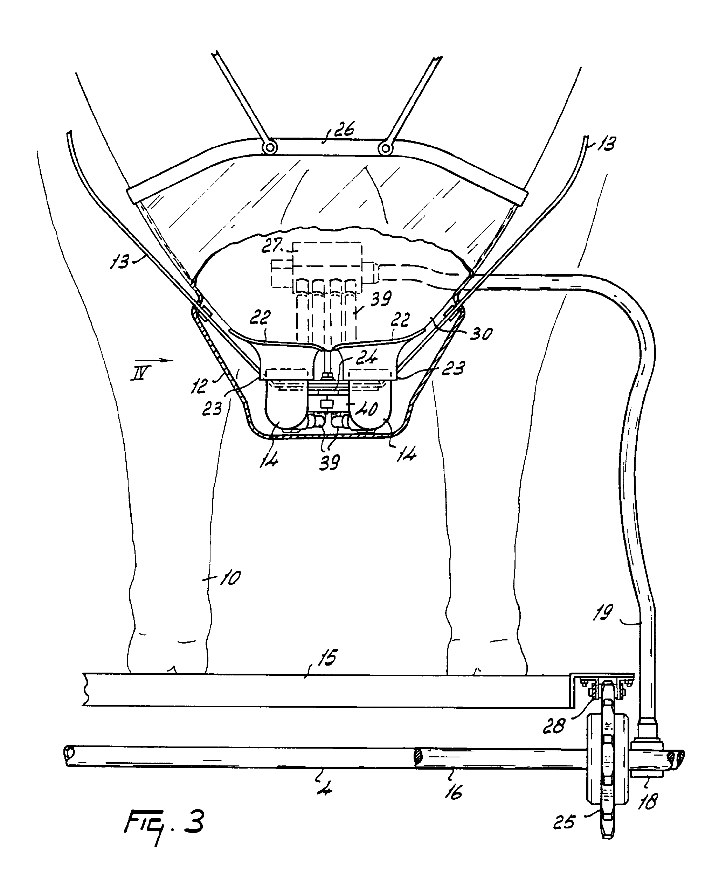

Figure 3 shows a cross-section of the transparent envelope 12, containing four teat cups 14, of which two are visible. The teat cups are provided with a connection, directed forwardly, in view of the necessary conduits. The upper rim 22 of the teat cup is adapted to the shape of the udder, so that a proper attachment to the udder can be obtained. The upper rim 22 is set in the flexible upper part 23 of the teat cup. The straps 13, ensuring the attachment of the milking cluster to the cow, carry both the envelope 12 and a central portion 24, to which the teat cups 14 are connected. Through a flexible conduit 19, containing various pipes, the teat cups are linked with the connection box 18 near the floor of the milking site. The floor of the milking site consists of elements 15, mutually connected and guided around the chain wheels 25, as an endless conveyor. One or more of the chain wheels 25 may be driven by means which are not further defined, such as an electric motor.

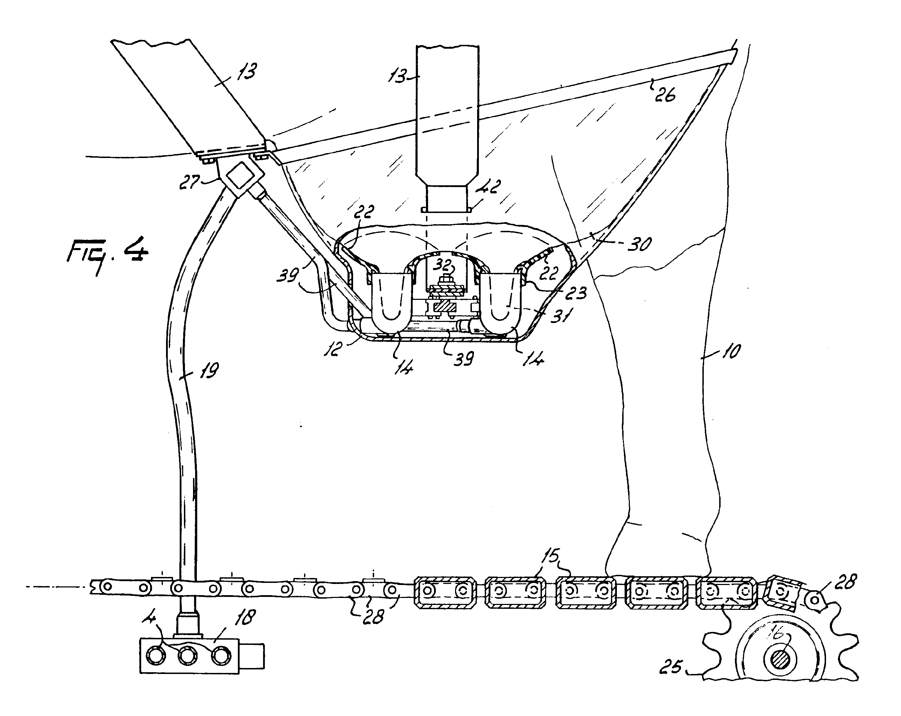

Figure 4 shows, in a way similar to that of Figure 3, the milking cluster in a lateral view. The envelope 12 is provided with a flexible upper rim 26, making it possible to obtain a proper attachment to the udder of the cow. At the front of the envelope 12, a unit 27, attached to one of the straps 13, is rendered. Said unit 27 may comprise a pulsator for achieving a varying air pressure. Furthermore, the unit 27 may comprise the necessary valves and other means for the performance of the milking cluster. A cross-section is given of the elements 15, constituting the floor, said elements consisting of e.g. steel beams with a closed profile and being mutually linked up by means of shackles 28, constituting a chain which engages with the chain wheels 25.

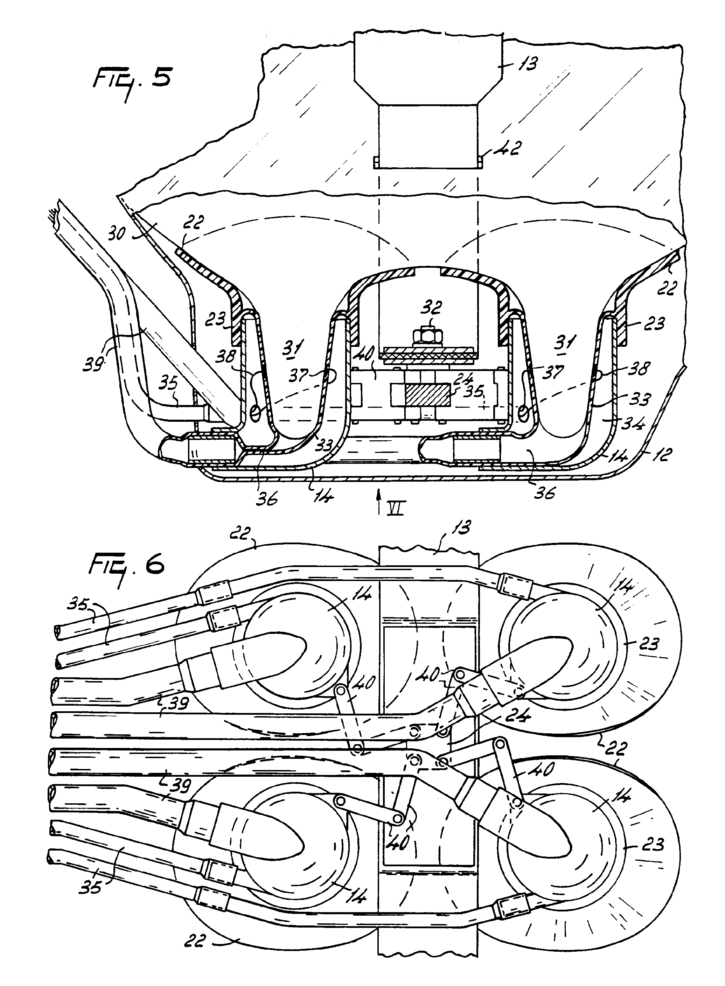

Figure 5 shows in more detail a first embodiment of the milking cluster. It comprises a schematic rendering of the udder 30 with the teats 31 of the cow. The udder 30 is encompassed by the transparent envelope 12 which is attached to the cow by means of a strap 13. Contained within the envelope 12 is a central portion 24, which is also connected to strap 13 by means of a bolt 32. Attached to the central portion 24 are the four teat cups 14, a cross-section of two such cups being provided in Figure 5. The teat cups 14 are provided on the upper side with a flexible top part 23, which may have such a shape that the required attachment to the udder can be obtained. Although the upper part 23 may, because of its flexibility, adapt itself to the shape of the udder, it may be desirable to pre-shape said upper part in such a manner, that a shape is obtained which matches the average size of an udder. In that case the upper part 23 will not have a symmetric shape.

The teat cups 14, rendered in Figure 5, are relatively short, i.e. they have a comparatively small size in height and, accordingly, the teat 31 will extend to the vicinity of the teat cup's lowermost side. Within the teat cup, the teat holder 33 is provided, said holder being integrally connected with the flexible upper part 23 and encompassing the teat when the latter is present in the teat cup. Around the teat holder 33 a chamber 34 is provided, in which a varying air pressure can be brought about via a pulsation conduit, so that the chamber 34 is connected with the pulsator which is not rendered in this Figure. The pulsation hose 35 debouches into the chamber 34 through an aperture 36. Provided in the teat holder 33 are sensors 37, which can detect if the teats occupy a correct position in the teat cup. The sensors 37 are connected by means of electrical conduits 38 to a control unit which is not shown in Figure 5. In the given embodiment said electrical conduits are guided through the pulsation hoses 35.

The milk hoses 39, shown in Figure 5, ensure the discharge of milk and are mounted in a lateral position with regard to the teat cups 14 in such a manner that the total height of the teat cup scarcely exceeds the length of the teat 31. Thus, a compact teat cup can be obtained, its height being less than twice the diameter. Generally speaking, an advantage of such a teat cup is that the parts of the milking cluster do not project downwardly farther than necessary, which reduces the risk of the animal kicking the milking cluster down.

Figure 6 is a schematic bottom view of the milking cluster, shown in Figure 5. Figure 6 renders four milk hoses 39 and four pulsation hoses 35, each of which leads to a teat cup 14. The teat cups 14 are connected, by means of mutually pivotable arms 40, to the central portion that is attached to the strap 13. Accordingly, the teat cups are allowed to move in respect of one another in a substantially level plane, enabled to do so also because the hoses 35 and 39 are sufficiently flexible for that purpose. Therefore, the milking cluster can adapt itself to the position of the teats, which position may vary according to the state or condition of the udder.

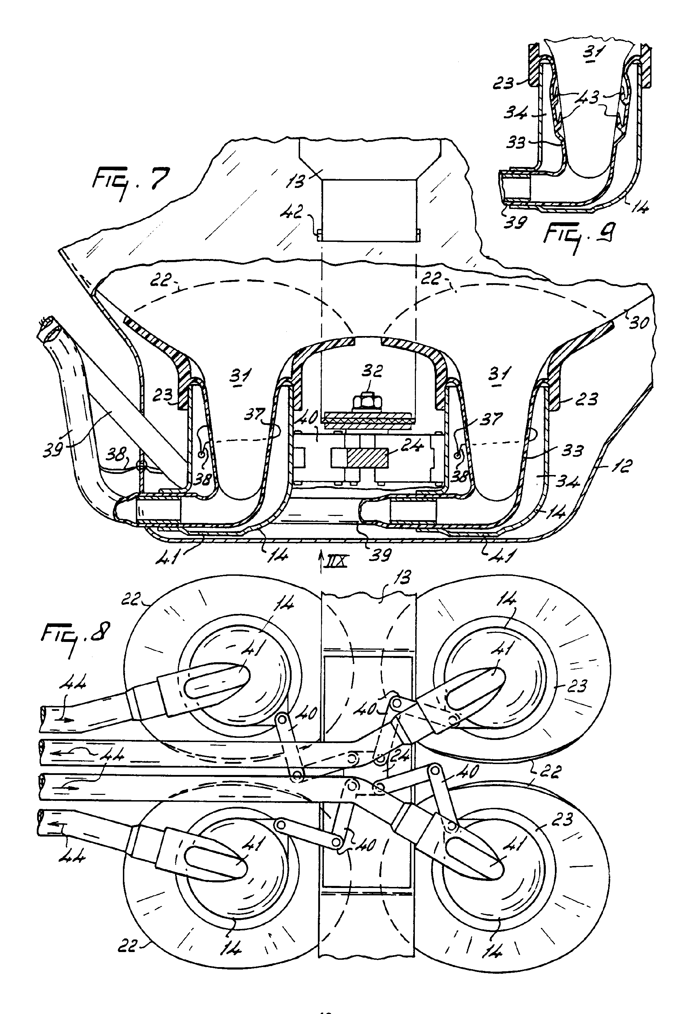

Figure 7 shows a second embodiment, without pulsation hoses being provided. In this embodiment, too, the teat holder 33 is provided with sensors 37, which are capable of observing the presence and/or correct position of the teats in the teat cups. In said embodiment, the chamber 34 around the teat holder is not subjected to a varying air pressure, but may constitute a resilient air cushion, respectively be equipped with a breather opening, so that the atmospheric air pressure is maintained in chamber 34. Through the milk hose 39 a varying pressure is brought about, e.g. a varying sequence of a partial vacuum and atmospheric pressure. When a partial vacuum prevails, milk is sucked from the teat, while during the period that there is no partial vacuum there is a massage of the teat, at least a stimulation of the blood circulation. In order to prevent that during the exertion of a partial vacuum the locking hole of the teat is blocked, because it comes to rest against the lowermost side of the teat holder, the teat cup 14 is provided with an embossment device 41 which prevents the teat cup from shutting off the locking hole.

As is evident from Figure 7, the strap 13, to which the central portion 24 is connected by means of a bolt 32 via a slotted hole 42, traverses the transparent envelope 12, so that both said envelope 12 and the milking cluster are supported.

Figure 8 shows a bottom view of the milking cluster according to Figure 7. From said Figure it is clear that the embossment devices 41 at the lowermost sides of the teat cups 14 have a slightly protracted shape. It is preferable that the low and high pressure in the various teat cups should be brought about in such a way, that two teat cups, situated diagonally in respect of one another, are subjected simultaneously to a low, respectively to a high pressure, as indicated by the arrows 44. A certain upward movement of the milking cluster may result from the varied suction, which may have a positive influence on the milking process.

Figure 9 shows a teat cup which is provided with a teat holder 33 with substantially annular, upwardly directed lamellae 43. These lamellae 43 may lean against the teat and prevent air from being sucked on along the teat in those periods when an a partial vacuum prevails in the milk hose. Air or liquid is allowed to escape along the teat, however, if a sufficient excess pressure is brought about in the milk hose, e.g. during cleansing or drying of the teat.

The embodiments described are merely examples of the application of any or more characteristics of the invention and, accordingly, the invention should not be considered to be restricted to any embodiment given. In this context it is possible that e.g. the milk hoses 39, shown in the Figures 5 and 7, project downwardly straight from the envelope 12, so that liquid contained by said hoses may flow off in an easier manner.

Although certain features of the implement that have been described and/or that are illustrated in the accompanying drawings will be set forth in the following claims as inventive features, it is emphasized that the invention is not necessarily limited to those features and that it includes within its scope each of the parts of the implement that has been described, and/or that is illustrated in the accompanying drawings, both individually and in various combinations.

## Claims

1. A milking implement for animals, such as cows, comprising one or more teat cups (14), each of which being provided with a teat holder (33) and a hose (39), whereby milk is discharged during milking via the hose (39) by means of a partial vacuum and comprising control means (8, 9) by means of which during intervals between milking a liquid or air is supplied between a teat (31) of the animal and the teat holder (33) of the teat cup (14) connected to said teat (31), characterized in that a connection box (18) is provided for selectively connecting one conduit of a set of conduits (4) to the hose (39), so that the liquid or air is supplied by the same hose (39) which discharges the milk during milking.

2. A milking implement as claimed in claim 1, characterized in that the liquid or air are discharged via the hose (39).

3. A milking implement as claimed in claim 1, or 2, characterized in that a teat cup (14) is provided with means to allow the liquid or air to escape along the teat if a sufficient excess pressure is brought about in the hose (39).

4. A milking implement as claimed in claim 3, characterized in that said means is constituted by substantially, upwardly directed lamellae (43) on the interior side of the teat cup (14), which lamellae (43) may lean against the teat and prevent air form being sucked along the teats (31) when a partial vacuum prevails in the hose (39).

## Patentansprüche

1. Melkvorrichtung für Tiere, beispielsweise Kühe, mit einem oder mehreren Zitzenbechern (14), von denen jeder mit einem Zitzenhalter (33) und einem Schlauch (39) versehen ist, wobei während des Melkens Milch über einen Schlauch (39) mittels eines partiellen Vakuums abgeführt wird, und mit einer Steuereinrichtung (8, 9), durch die eine Flüssigkeit oder Luft während Melkintervallen zwischen eine Zitze (31) des Tieres und den Zitzenhalter (33) des mit der Zitze (31) verbundenen Zitzenbechers (14) zugeführt wird, dadurch gekennzeichnet, daß ein Verbindungs-Schaltkasten (18) vorgesehen ist zum selektiven Verbinden einer Leitung aus einem Satz von Leitungen (4) mit dem Schlauch (39) derart, daß die Flüssigkeit oder Luft über denselben Schlauch (39) zugeführt wird, welcher die Milch während des Melkens abführt.

2. Melkvorrichtung nach Anspruch 1, dadurch gekennzeichnet, daß die Flüssigkeit oder Luft über den Schlauch (39) abgeführt wird.

3. Melkvorrichtung nach Anspruch 1 oder 2, dadurch gekennzeichnet, daß der Zitzenbecher (14) mit einer Einrichtung versehen ist, die ein Abströmen der Flüssigkeit oder der Luft entlang der Zitze beim Aufbringen eines genügenden Überdruckes im Schlauch (39) erlaubt.

4. Melkvorrichtung nach Anspruch 3, dadurch gekennzeichnet, daß die Einrichtung im wesentlichen aus aufwärts gerichteten Lamellen (43) gebildet ist, die sich auf der Innenseite des Zitzenbechers (14) befinden und sich an die Zitze anlegen können, und die das Absaugen von Luft entlang der Zitzen (31) verhindern, wenn in dem Schlauch (39) ein partielles Vakuum herrscht.

**Revendications**

1. Machine pour traire des animaux, tels que des vaches, comprenant un ou plusieurs godets de trayons (14) dont chacun est muni d'un support de trayon (33) et d'un tuyau souple (39), le lait étant évacué au cours de la traite par l'intermédiaire du tuyau souple (39) au moyen d'un vide partiel et comprenant des moyens de commande (8, 9) au moyen desquels, pendant des intervalles entre la traite, un liquide ou de l'air est débité entre un trayon (31) de l'animal et le support de trayon (33) du godet de trayon (14) relié audit trayon (31), **caractérisée** en ce qu'une boîte de jonction (18) est prévue pour relier sélectivement un conduit d'un ensemble de conduits (4) au tuyau souple (39), de telle sorte que le liquide ou l'air est débité par le même tuyau souple (39) qui évacue le lait pendant la traite.

2. Machine à traire selon la revendication 1, caractérisée en ce que le liquide ou l'air sont évacués par l'intermédiaire du tuyau souple (39).

3. Machine à traire selon la revendication 1 ou 2, caractérisée en ce qu'un godet de trayon (14) est pourvu d'un moyen pour permettre au liquide ou à l'air de s'échapper le long du trayon si un excès de pression suffisant est provoqué dans le tuyau souple (39).

4. Machine à traire selon la revendication 3, caractérisée en ce que ledit moyen est constitué par des lamelles (43) dirigées sensiblement vers le haut sur le côté intérieur du godet de trayon (14), ces lamelles (43) pouvant s'appuyer contre le trayon et empêcher l'aspiration d'air le long des trayons (31) quand un vide partiel règne dans le tuyau souple (39).

FIG. 1

FIG. 2

FIG. 3

FIG. 4

EP 0 347 955 B1

FIG. 5

FIG. 6

FIG. 7

FIG. 9

FIG. 8